# EUROPÄISCHE PATENTSCHRIFT

(11) **EP 4 447 758 B1**
(45) Veröffentlichungstag und Bekanntmachung des Hinweises auf die Patenterteilung: **05.11.2025**
(21) Anmeldenummer: 22798057.0
(22) Anmeldetag: 28.09.2022
(51) Int. Cl.: A23N 1/00, B67C 3/22, A47J 19/02

(54) **VORRICHTUNG ZUR SAFTENTNAHME AUS EINEM SAFTBEHÄLTER EINER FRUCHTPRESSE**
DEVICE FOR EXTRACTING JUICE FROM A JUICE CONTAINER OF A FRUIT PRESS
DISPOSITIF D'EXTRACTION DE JUS D'UN CONTENANT DE JUS D'UNE PRESSE À FRUITS

(30) Priorität: 14.12.2021 AT 509992021
(43) Veröffentlichungstag der Anmeldung: 23.10.2024
(73) Patentinhaber: Citrocasa GmbH, 4020 Linz (AT)
(72) Erfinder: HUBER, Johannes, 4225 Luftenberg (AT)
(74) Vertreter: Hübscher & Partner Patentanwälte GmbH
(86) Internationale Anmeldenummer: PCT/AT2022/060337
(87) Internationale Veröffentlichungsnummer: WO 2023/108181

(56) Entgegenhaltungen:
- EP-A1- 3 000 774
- CN-A- 106 276 740
- DE-T2- 69 808 118
- JP-A- 2005 231 664
- US-A1- 2016 052 767

## Beschreibung

Die Erfindung bezieht sich auf eine Vorrichtung zur Saftentnahme aus einem Saftbehälter einer Fruchtpresse mit einem an den Saftbehälter angeschlossenen, ein Entnahmeventil aufweisenden Auslauf oberhalb einer Gefäßaufnahme, die eine eine hängende Flasche halsseitig aufnehmende, auf wenigstens einer Wiegezelle abgestützte Halterung bildet, wobei das Entnahmeventil durch eine Steuereinrichtung in Abhängigkeit von den Messsignalen der Wiegezelle ansteuerbar ist.

Fruchtpressen insbesondere für Citrusfrüchte weisen häufig kugelförmige Pressstempel auf, die in halbkugelförmige Matrizen eingreifen und die von den Matrizen aufgenommenen, halbierten Früchte auspressen. Der ausgepresste, gesammelte Saft wird durch einen Auslauf abgeleitet und kann in einem Gefäß aufgefangen werden. Um eine vom Pressvorgang unabhängige Saftentnahme zu ermöglichen, wird ein den ausgepressten Saft aufnehmender Saftbehälter vorgesehen, der mit einem Auslauf und einem im Zuge des Auslaufs angeordneten Entnahmeventil, üblicherweise in Form eines Zapfhahns, versehen ist. Da der Abstand zwischen der durch eine Aufstellfläche für ein Gefäß gebildeten Gefäßaufnahme und dem Zapfhahn konstruktiv vorgegeben ist, hängen die Zapfverhältnisse von der Größe der zu befüllenden Gefäße ab. Dieser Umstand steht einem Befüllen von unterschiedlich großen Gefäßen, insbesondere Flaschen, unter gleichbleibenden Füllbedingungen entgegen, um eine Verunreinigung der Gefäße bzw. der Gefäßaufnahme durch fehlgeleitete Saftströme weitgehend ausschließen zu können.

Zur industriellen Abfüllung von Flaschen ist es bekannt (US 2016/0052767 A1), an einen Getränkebehälter angeschlossene Füllventile vorzusehen, zu denen die zu befüllenden Flaschen durch je einen Tragarm gefördert werden. Die die Flaschen im Bereich des Flaschenhalses ergreifenden Tragarme sind auf Wiegezellen abgestützt, die mit einer Steuereinrichtung für die Füllventile verbunden sind. Der Füllvorgang kann somit durch eine Schließen der Füllventile beendet werden, wenn die Wiegezellen das Erreichen eines vorgegebenen Füllgewichts der Steuereinrichtung anzeigen. Voraussetzung für ein ordnungsgemäßes Abfüllen ist allerdings, dass einheitliche Flaschen zum Einsatz kommen, wovon bei industriellen Abfüllanlagen ausgegangen werden kann, nicht aber bei einer händischen Saftentnahme aus dem Sammelbehälter einer Fruchtpresse.

Vergleichbare Verfahren zur gewichtsabhängigen Befüllung von Flaschen gehen auch aus der DE 69808118 T2, der EP 3000774 A1 und der JP 2005231664 A hervor. Die Flaschen werden im Halsbereich aufgehängt und während des Befüllens gewogen.

Zum automatischen Abfüllen von Flaschen mit dem Fruchtsaft aus einer Fruchtpresse ist es schließlich bekannt (CN 106276740 A), den Fruchtsaft aus einem Sammelbehälter mithilfe von Druckluft durch einen Schlauch in die auf einem Förderer bereitgestellten Flaschen unter Einsatz eines Füllstandanzeigers zu füllen und die gefüllten Flaschen zu einer Verschließeinrichtung zu fördern, in der die Flaschen mit einem Schraubverschluss versehen werden. Auch diese Vorrichtung setzt einheitliche Flaschen voraus.

Der Erfindung liegt somit die Aufgabe zugrunde, konstruktive Voraussetzungen zu schaffen, um aus dem Saftbehälter einer Fruchtpresse Flaschen unter gleichbleibenden Füllbedingungen vorteilhaft befüllen zu können, ohne die Gefahr einer Verschmutzung der Flaschen bzw. der Gefäßaufnahme durch fehlgeleitete Saftströme in Kauf nehmen zu müssen.

Ausgehend von einer Vorrichtung der eingangs geschilderten Art löst die Erfindung die gestellte Aufgabe dadurch, dass der Halterung wenigstens ein Füllstandsensor zugeordnet ist und dass das Entnahmeventil durch die an eine Eingabeeinheit angeschlossene Steuereinrichtung in Abhängigkeit von den Messsignalen der Wiegezelle und des Füllstandsensors ansteuerbar ist.

Da die zu befüllenden Flaschen, die üblicherweise ein durch einen vorstehenden Kragen gegenüber dem Hals abgegrenztes Gewinde für eine Schraubkappe oder eine verdickte Verschlussaufnahme aufweisen, halsseitig in einer Halterung der Gefäßaufnahme hängend positioniert werden und daher diese Halterung den Abstand der Füllöffnung der Flaschen vom Auslauf des Saftbehälters unabhängig von der Flaschengröße konstruktiv vorgibt, können gleichbleibende Füllbedingungen für alle Flaschengrößen sichergestellt werden.

Um die Befüllung der Flaschen anhand von Messsignalen zu überwachen, wird die Halterung der Gefäßaufnahme über wenigstens eine Wiegezelle abgestützt, sodass aufgrund der Gewichtsmessung das jeweilige Füllvolumen bestimmt werden kann. Die Dichte des ausgepressten Fruchtsafts kann ja mit einer für diesen Zweck ausreichenden Genauigkeit vorgegeben werden.

Zusätzlich wird der Füllvorgang durch wenigstens einen Füllstandsensor überwacht, der der Halterung der Gefäßaufnahme zugeordnet ist. Mit diesem Füllstandsensor, der beispielsweise als kapazitiver Abstandssensor ausgebildet sein kann, kann die noch für den Füllvorgang zur Verfügung stehende, restliche Füllhöhe oberhalb des bereits eingefüllten Saftvolumens unabhängig von der Flaschengröße erfasst und damit ein Überfüllen der Flasche sicher vermieden werden.

Zu seiner Betätigung ist das Entnahmeventil mit einer Steuereinrichtung verbunden, die an eine Eingabeeinheit angeschlossen ist und mit den Messsignalen der Wiegezelle und des Füllstandsensors beaufschlagt wird. Über die Eingabeeinheit kann somit das gewünschte Abfüllvolumen vorgewählt werden, um den Füllvorgang einzuleiten. Mithilfe der Wiegezelle kann das Vorhandensein einer Flasche in der Halterung der Gefäßaufnahme durch die Steuereinrichtung überprüft und anschließend der Füllvorgang eingeleitet werden, der beendet wird, wenn die Wiegezelle das über die Eingabeeinheit eingegebene Sollgewicht anzeigt. Weist die in der Halterung halsseitig aufgenommene Flasche ein für das vorgewählte Füllvolumen zu kleines Aufnahmevolumen auf, besteht also die Gefahr einer Überfüllung, so wird der Füllvorgang aufgrund der Messsignale des Füllstandsensors unterbrochen, sobald ein vorgegebener maximaler Füllstand angezeigt wird.

Obwohl für die halsseitige Aufnahme hängender Flaschen unterschiedliche Halterungen möglich sind, beispielsweise in Form von den Flaschenhals unterhalb eines Schraubgewindes für eine Schraubkappe zangenartig umschließenden Greifern, ergeben sich besonders einfache Konstruktionsverhältnisse, wenn die Halterung eine Gabel zum halsseitigen Einhängen einer Flasche bildet.

Das Entnahmeventil und sein Stelltrieb können ebenfalls unterschiedlich ausgeführt werden, weil es erfindungsgemäß vor allem um eine entsprechende Ansteuerung dieses Entnahmeventils geht. Trotzdem kann für eine vorteilhafte Ausgestaltung dadurch gesorgt werden, dass der Auslauf einen Fallrohstutzen und einen auf dem Fallrohrstutzen teleskopartig verschiebbaren Auslaufstutzen aufweist, dass das Entnahmeventil einen am auslaufseitigen Ende des Fallrohstutzens ausgebildeten Ventilsitz und einen mit diesem Ventilsitz zusammenwirkenden, im Auslaufstutzen verschiebefest gehaltenen Ventilkörper umfasst und dass der im Schließsinn des Entnahmeventils federbeaufschlagte Auslaufstutzen durch einen Stelltrieb gegen die Federbeaufschlagung verschiebbar ist. Da zufolge dieser Maßnahmen der auf dem Fallrohrstutzen teleskopartig verschiebbare Auslaufstutzen als Stellglied für das Entnahmeventil dient, wird der Auslaufstutzen zum Öffnen des Entnahmeventils gegen die Füllöffnung der zu befüllenden Flasche abgesenkt, sodass der aus dem Auslaufstutzen auslaufende Fruchtsaft unmittelbar in die Füllöffnung der in der Halterung aufgenommenen Flasche fließt. Das Entnahmeventil ist hierfür zweckdienlich ausgebildet, weil der verschiebefest im Auslaufstutzen gehaltene Ventilkörper mit dem am auslaufseitigen Ende des Fallrohrstutzens geformten Ventilsitz zusammenwirkt und im Schließsinn federnd beaufschlagt ist, sodass zum Öffnen des Entnahmeventils der Auslaufstutzen entgegen der Federkraft verlagert werden muss, was in einfacher Art durch einen Stelltrieb bewerkstelligt werden kann.

Mit der vorgesehenen Ausbildung des Entnahmeventils werden einfache Voraussetzungen für eine automaische Bedienung der Vorrichtung geschaffen, wenn der Stelltrieb durch eine an die Eingabeeinheit angeschlossene Steuereinrichtung angesteuert wird. Hierfür eignen sich insbesondere elektromagnetische Stelltriebe, die jedoch keineswegs zwingend sind.

In der Zeichnung ist der Erfindungsgegenstand beispielsweise dargestellt. Es zeigen
- Fig. 1: eine erfindungsgemäße Vorrichtung zur Saftentnahme aus einem Saftbehälter einer Fruchtpresse in einer vereinfachten Seitenansicht,
- Fig. 2: diese Vorrichtung in einem zur Seitenansicht parallelen Schnitt entlang des Auslaufs in der Schließstellung des Entnahmeventils und
- Fig. 3: einen der Fig. 2 entsprechenden Schnitt, jedoch bei geöffnetem Entnahmeventil.

Die dargestellte Vorrichtung, die einen Teil einer Fruchtpresse bildet, umfasst einen Saftbehälter 1, dessen Boden 2 mit einem Auslauf 3 versehen ist. Dieser Auslauf 3 weist einen Fallrohrstutzen 4 und einen auf dem Fallrohrstutzen 4 teleskopartig verschiebbaren Auslaufstutzen 5 auf. Obwohl im dargestellten Ausführungsbeispiel der Fallrohrstutzen 4 am Boden 2 des Saftbehälters 1 angesetzt ist, ist dies nicht zwingend. Aus Platzgründen kann der Fallrohrstutzen 4 beispielsweise auch an eine Ausflussleitung angeschlossen sein, die von einer Wand des Saftbehälters 1 in dessen Bodenbereich ausgeht.

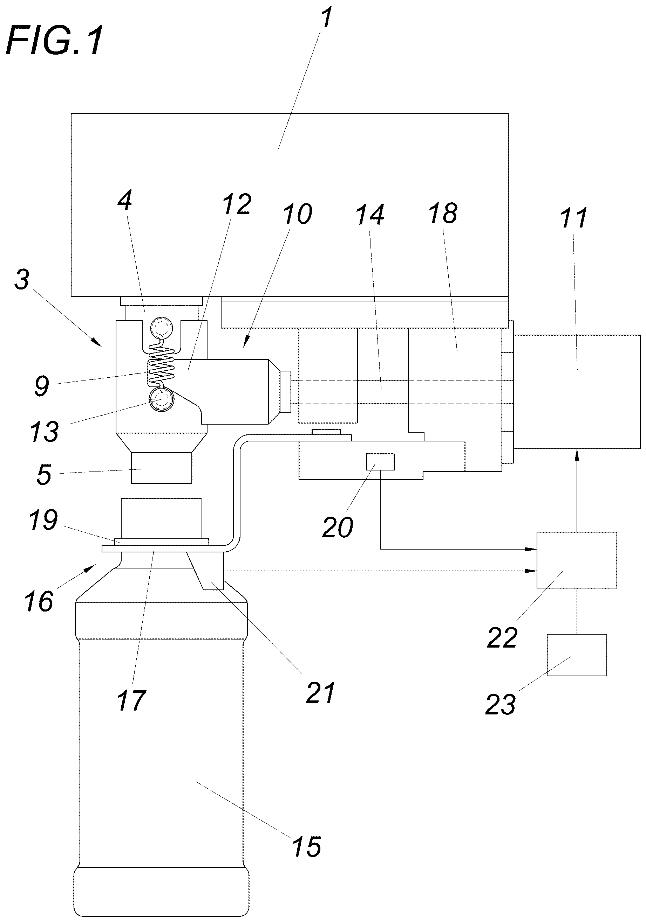

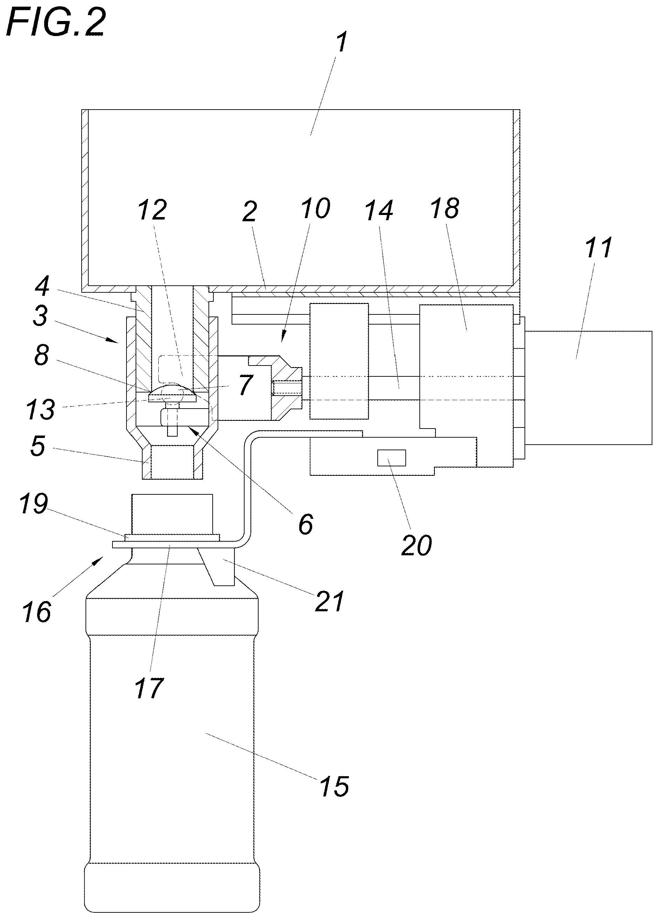

Im Auslauf 3 ist ein Entnahmeventil 6 aus einem zum Fallrohrstutzen 4 koaxialen Ventilkörper 7 und einem am Ende des Fallrohrstutzens 4 ausgebildeten Ventilsitz 8 vorgesehen. Da der Ventilkörper 7 im Auslaufstutzen 5 verschiebefest gehalten wird, dient der auf dem Fallrohrstutzen teleskopisch verschiebbare Auslaufstutzen 5 als Stellglied für den Ventilkörper 7, das im Schließsinn des Entnahmeventils 6 federnd beaufschlagt wird, sodass das das Entnahmeventil 6 eine federbelastete Schließstellung nach der Fig. 2 einnimmt. Die Federbeaufschlagung des Auslaufstutzens 5 wird gemäß der Fig. 1 durch zwei einander diametral gegenüberliegende Schraubenfedern 9 erreicht, die einerseits am Fallrohrstutzen 4 und anderseits am Auslaufstutzen 5 angreifen.

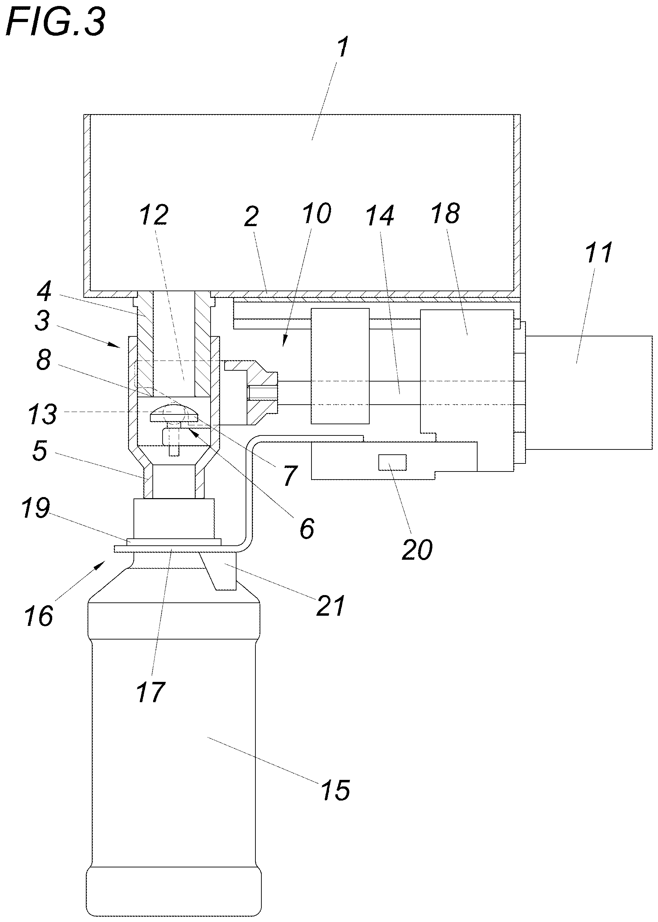

Zum Öffnen des Entnahmeventils 6 wird der Auslaufstutzen 5 mittels eines Stelltriebs 10 entgegen der Kraft der Schraubenfedern 9 entlang des Fallrohrstutzens 4 nach unten in die Öffnungsstellung nach der Fig. 3 verlagert. Der Stelltrieb 10 ist vorteilhaft als ein mit einem elektromagnetischen Antrieb 11 verbundenes Keilgetriebe ausgebildet, das einen Stellkeil 12 mit zwei den Auslaufstutzen 5 umgreifenden Armen und zwei mit dem Stellkeil 12 zusammenwirkende Anlaufrollen 13 auf einander gegenüberliegenden Seiten des Auslaufstutzens 5 umfasst. Der Stellkeil 12 ist durch eine axial verschiebbar gelagerte Stellstange 14 mit dem elektromagnetischen Antrieb 11 verbunden, der vorteilhaft eine elektrische Spule mit einem Eisenkern als Linearantrieb aufweist. Wird demnach der elektromagnetische Antrieb 11 betätigt, so werden die beiden Arme des Stellkeils 12 gegen die Anlaufrollen 13 des Auslaufstutzens 4 mit der Wirkung bewegt, dass die entlang der keilförmigen Arme des Stellkeils 12 ablaufenden Anlaufrollen 13 den Auslaufstutzen 5 gegen die Kraft der Schraubenfedern 9 auf dem Fallrohrstutzen 4 nach unten bewegen, sodass der Ventilkörper 7 vom Ventilsitz 8 abgehoben wird. Obwohl ein solches Entnahmeventil 6 mit dem Stelltrieb 10 eine vorteilhafte ausführungsvariante darstellt, ist die Erfindung nicht auf eine solche konstruktive Ausgestaltung beschränkt, weil es ja nicht auf die Art des Entnahmeventils und seines Antriebs, sondern auf die hängende Position der zu befüllenden Flaschen 15 in einer Gefäßaufnahme 16 und die Überwachung des Füllvorgangs in dieser hängenden Flaschenposition ankommt.

Die Gefäßaufnahme 16 weist eine Halterung 17 zur hängenden Flaschenaufnahme beispielsweise in Form einer Gabel auf. Diese Halterung 17 ist unterhalb des Auslaufs 3 an einem Gestell 18 vorgesehen, das auch den Saftbehälter 1 mit dem Auslauf 3 und den Stelltrieb 10 für den Auslaufstutzen 5 aufnimmt. Die Halterung 17 untergreift den üblicherweise als Gewindeabschluss des Flaschenhalses dienenden Kragen 19 der zu befüllenden Flasche 15, sodass diese Flasche 15 lediglich halsseitig in die Gabel der Halterung 17 einzuhängen ist und dabei in einem konstruktiv vorgegebenen Abstand zum Auslauf 3 gehalten wird. Dieser Abstand wird vorzugsweise in Abhängigkeit vom Öffnungsweg des Entnahmeventils 6 gewählt, um die Öffnungsbewegung des Auslaufstutzens 5 zu einem Absenken des Auslaufendes des Auslaufstutzens 5 in den Bereich der Füllöffnung der Flasche 15 nützen zu können.

Zur Überwachung des Füllvorgangs ist die Halterung 17 der Gefäßaufnahme 16 durch wenigstens eine Wiegezelle 20 gegenüber dem Gestell 18 lastabtragend abgestützt. Außerdem ist der Halterung 17 wenigstens ein Füllstandsensor 21 zugeordnet, der den jeweiligen Abstand des Flüssigkeitsspiegels von der Halterung 17 erfasst. Über die Wiegezelle 20 und den Füllstandsensor 21 wird eine in der Fig. 1 schematisch angedeutete Steuereinrichtung 22 mit entsprechenden Messsignalen beaufschlagt, um den elektromagnetischen Antrieb 11 des Stelltriebs 10 gemäß den programmbedingt ausgewerteten Messsignalen anzusteuern. Mithilfe einer Eingabeeinheit 23 können der Steuereinrichtung 22 zusätzliche, auf die Steuerung des elektromagnetischen Antriebs 11 einflussnehmende Parameter vorgegeben werden.

## Patentansprüche

1. Vorrichtung zur Saftentnahme aus einem Saftbehälter (1) einer Fruchtpresse mit einem an den Saftbehälter (1) angeschlossenen, ein Entnahmeventil (6) aufweisenden Auslauf (3) oberhalb einer Gefäßaufnahme (16), die eine eine hängende Flasche (15) halsseitig aufnehmende, auf wenigstens einer Wiegezelle (20) abgestützte Halterung (17) bildet, wobei das Entnahmeventil (6) durch eine Steuereinrichtung (22) in Abhängigkeit von den Messsignalen der Wiegezelle (20) ansteuerbar ist, **dadurch gekennzeichnet, dass** der Halterung (17) wenigstens ein Füllstandsensor (21) zugeordnet ist und dass das Entnahmeventil (6) durch die an eine Eingabeeinheit (23) angeschlossene Steuereinrichtung (22) in Abhängigkeit von den Messsignalen der Wiegezelle (20) und des Füllstandsensors (21) ansteuerbar ist.

2. Vorrichtung nach Anspruch 1, **dadurch gekennzeichnet, dass** die Halterung eine Gabel (17) zum halsseitigen Einhängen einer Flasche (15) bildet.

3. Vorrichtung nach Anspruch 1 oder 2, **dadurch gekennzeichnet, dass** der Auslauf (3) einen Fallrohstutzen (4) und einen auf dem Fallrohrstutzen (4) teleskopartig verschiebbaren Auslaufstutzen (5) aufweist, dass das Entnahmeventil (6) einen am auslaufseitigen Ende des Fallrohstutzens (5) ausgebildeten Ventilsitz (8) und einen mit diesem Ventilsitz (8) zusammenwirkenden, im Auslaufstutzen (5) verschiebefest gehaltenen Ventilkörper (7) umfasst und dass der im Schließsinn des Entnahmeventils (6) federbeaufschlagte Auslaufstutzen (5) durch einen Stelltrieb (10) gegen die Federbeaufschlagung verschiebbar ist.

## Claims

1. Device for drawing juice from a juice container (1) of a fruit press, with an outlet (3) above a vessel mounting (16), the outlet (3) connected to the juice container (1) and having a drawing valve (6), wherein the vessel mounting (16) forms a holder (17) receiving a hanging bottle (15) at the neck side and being supported by at least one weighing cell (20), wherein the drawing valve (6) can be controlled as a function of the measurement signals of the weighing cell (20) by a control device (22), **characterized in that** at least one level sensor (21) is assigned to the holder (17) and **in that** the drawing valve (6) can be controlled by the control device (22) connected to an input unit (23) as a function of the measurement signals from the weighing cell (20) and the level sensor (21).

2. Device according to claim 1, **characterised in that** the holder forms a fork (17) for hanging a bottle (15) on the neck side.

3. Device according to claim 1 or 2, **characterised in that** the outlet (3) has a downpipe socket (4) and an outlet socket (5) which is telescopically displaceable on the downpipe socket (4), **in that** the drawing valve (6) comprises a valve seat (8) formed at the outlet-side end of the downpipe socket (5) and a valve body (7), which cooperates with this valve seat (8) and is held in a displacement-proof manner in the outlet socket (5), and **in that** the outlet socket (5), which is springloaded in the closing direction of the drawing valve (6), can be displaced counter to the spring loading by an actuator (10).

## Revendications

1. Dispositif d'extraction de jus d'un contenant de jus (1) d'une presse à fruits, présentant une sortie (3) qui est reliée au contenant de jus (1) et possède une soupape de retrait (6) au-dessus d'un récipient de cuve (16) qui forme un dispositif de support (17) recevant une bouteille suspendue (15) par son goulot et supporté sur au moins une cellule de pesée (20), la soupape de retrait (6) pouvant être activée par un dispositif de commande (22) en fonction des signaux de mesure de la cellule de pesée (20), **caractérisé en ce qu'**au moins un capteur de niveau de remplissage (21) est associé au dispositif de support (17) et **en ce que** la soupape de retrait (6) peut être activée par le dispositif de commande (22) relié à une unité d'entrée (23) en fonction des signaux de mesure de la cellule de pesée (20) et du capteur de niveau de remplissage (21).

2. Dispositif selon la revendication 1, **caractérisé en ce que** le dispositif de support forme une fourche (17) pour accrocher une bouteille (15) par le goulot.

3. Dispositif selon la revendication 1 ou 2, **caractérisé en ce que** la sortie (3) comporte un raccord de tuyau de descente (4) et un raccord de sortie (5) pouvant coulisser de manière télescopique sur le raccord de tuyau de descente (4), **en ce que** la soupape de retrait (6) comprend un siège de soupape (8) formé à l'extrémité côté sortie du raccord de tuyau de descente (5) et un corps de soupape (7) coopérant avec ce siège de soupape (8) et maintenu de manière immobile dans le raccord d'écoulement (5), et **en ce que** le raccord d'écoulement (5), sollicité par ressort dans le sens de fermeture de la soupape de retrait (6), peut être déplacé à l'encontre de la sollicitation du ressort par un mécanisme de réglage (10).
